(19) **Europäisches Patentamt**
**European Patent Office**
**Office européen des brevets**

(11) Veröffentlichungsnummer : **0 486 458 A1**

(12) **EUROPÄISCHE PATENTANMELDUNG**

(21) Anmeldenummer : **91890242.0**

(22) Anmeldetag : **10.10.91**

(51) Int. Cl.⁵ : **B23Q 3/02, B23K 37/04**

(30) Priorität : **14.11.90 AT 2299/90**

(43) Veröffentlichungstag der Anmeldung :
**20.05.92 Patentblatt 92/21**

(84) Benannte Vertragsstaaten :
**AT BE CH DE DK ES FR GB GR IT LI LU NL SE**

(71) Anmelder : **IGM ROBOTERSYSTEME
Aktiengesellschaft
Industriezentrum Nö-Süd, Strasse 2a
A-2355 Wiener Neudorf, Niederösterreich (AT)**

(72) Erfinder : **Wichart, Klaus, Dr.
Jägerhausgasse 2-4
A-1120 Wien (AT)**
Erfinder : **Chwatal, Walter
Göllnergasse 33
A-1030 Wien (AT)**

(74) Vertreter : **Beer, Manfred, Dipl.-Ing. et al
Lindengasse 8
A-1070 Wien (AT)**

(54) **Werkstückhalterung.**

(57) Eine Werkstückhalterung zur Befestigung eines Werkstückträgers (2) an einer Vorrichtung (1), vorzugsweise an einem Werkstückmanipulator einer Roboterschweißanlage besitzt eine Scheibe (3), die am Werkstückträger (2) angeordnet ist und wenigstens drei an der vorrichtung (1) angeordnete Halteeinrichtungen (6), die um eine gemeinsame Drehachse (5) verschwenkbar sind und an der Scheibe (3) angreifen.

Die Scheibe (3) weist wenigstens zwei kreisbogenförmige Randbereiche (7) und die Halteeinrichtungen (6) jeweils drei Rollen (12, 13, 14), von denen zwei gegenüberliegend an den Stirnflächen und eine an der Umfangsfläche der Scheibe (3) angreifen, auf.

Fig.1

EP 0 486 458 A1

Die Erfindung betrifft eine Werkstückhalterung zur Befestigung eines Werkstückträgers an einer Vorrichtung, vorzugsweise an einem Werkstückmanipulator einer Roboterschweißanlage.

Beim Abschweißen großer und schwerer Werkstücke in Roboterschweißanlagen besteht oft das Problem der Befestigung des Werkstückes in der Vorrichtung und der Übergabe des Werkstückes von der Förderanlage an den Werkstückmanipulator. Dieses Problem besteht jedoch nicht nur bei Roboterschweißanlagen, sondern auch bei anderen Anlagen, in denen viele unterschiedliche Werkstücke bearbeitet werden sollen.

Da u.a. auch Roboterschweißanlagen viele unterschiedliche Werkstücke abschweißen sollen (Losgröße bis zu 1) ist es notwendig, das Werkstück für das Fördersystem und für den Werkstückmanipulator zu uniformieren. Diese Vereinheitlichung erfolgt durch das Befestigen des Werkstückes an einem Werkstückträger, vorzugsweise einer Palette. Diese Paletten haben im wesentlichen zwei Bezugsflächen; die eine Bezugsfläche ist die Schnittstelle Palette zum Fördersystem und die andere Bezugsfläche ist die Schnittstelle Palette zum Werkstückmanipulator. Die Übergabe der Palette mit dem Werkstück von der Förderanlage an den Werkstückmanipulator erfolgt oft durch ein Fördersystem mit zwei Bewegungsrichtungen. Die eine Bewegungsrichtung wird benötigt, um die Palette mit dem Werkstück von der Einlegeposition in die Schweißstation zu fördern und umgekehrt. Zum Andocken der Palette an den Werkstückmanipulator ist dann ein zusätzlicher Bewegungshub notwendig. Durch das Absenken der Palette werden z.B. Palettenzapfen in vorgegebene Bohrungen eingeführt und dann verriegelt.

Das weitere Absenken eines Hubtisches bedingt ein Loslösen der Palette mit dem Werkstück von der Förderanlage. Dadurch kann der Förderer das nächste Werkstück anfördern.

Ein Nachteil dieser bekannten Anlagen ist es, daß ein zusätzlicher Hub der Fördereinrichtung notwendig ist. Dies bedingt entweder eine Pneumatik oder eine Hydraulik, die mit dem Förderwagen mitfahren muß, wobei u.a. das Problem der Druckluft- bzw. Olübertragung besteht.

In der DE-B-2 462 598 ist eine Spannvorrichtung zum starren Festlegen eines Werkstückes mit mehrfach gekrümmten Flächen an einer Grundplatte beschrieben. Das Werkstück wird dabei über auf der Grundplatte verschiebbar und festklemmbar angeordnete Stützen an der Grundplatte befestigt. Die Grundplatte kann dann für die Bearbeitung auf eine Bühne aufgesetzt und montiert werden.

In der DD-A-265 348 ist eine Vorrichtung zum Einspannen von Werkstücken beschrieben, bei welcher das Werkstück mit Zangenschenkeln eines Industrieroboters in eine Spannvorrichtung eingelegt wird. Die Spannvorrichtung besteht aus einer Grundplatte, die am Aufspanntisch einer Werkzeugmaschine befestigt ist und die zwei Spannbacken aufweist, von denen eine fest an der Grundplatte befestigt und die andere auf der Grundplatte durch einen Antrieb linear verschiebbar ist. Auf diese Weise kann das Werkstück Über die Zangenschenkel festgespannt werden.

Aus der US-A-4 544 311 ist eine Vorrichtung bekannt, die eine im wesentlichen ebene Ringplatte aufweist, die bezüglich fester Stützfinger begrenzt um einen Drehwinkel und in Richtung der X- Y-Koordinaten bewegbar ist. Die Ringplatte weist in der Mitte eine Öffnung auf, in der eine Maske aufgenommen und durch an der Ringplatte befestigte Zylinder festgelegt werden kann. Die Ringplatte kann dann zur genauen Positionierung der Maske über Druckmittelzylinder, die einerseits an der Ringplatte und anderseits an den Stützfingern angreifen, verschoben bzw. verdreht werden.

Aufgabe der Erfindung ist es, eine Werkstückhalterung anzugeben, die ein einfaches Befestigen eines Werkstückträgers an einer Vorrichtung, z.B. einem Werkstückmanipulator, ermöglicht.

Erfindungsgemäß wird diese Aufgabe durch eine Scheibe gelöst, die am Werkstückträger angeordnet ist und durch wenigstens drei an der Vorrichtung angeordnete Halteeinrichtungen, die zum Eingriff mit der Scheibe um eine gemeinsame Achse verschwenkbar sind.

Zum Befestigen des Werkstückträgers an der Vorrichtung muß diese nur mehr in einem einzigen Bewegungsvorgang eintransportiert werden. Durch Drehen des Werkstückmanipulators wird die Scheibe des Werkstückträgers in die Halteeinrichtung eingeführt. Der Werkstückträger ist in der Folge sowohl in X-, Y- als auch in Z-Richtung fest mit der Vorrichtung verbunden.

Wenn die Scheibe wenigstens zwei kreisbogenförmige Randbereiche aufweist, dann können die Halteeinrichtungen besonders einfach und sicher in Eingriff mit der Scheibe des Werkstückträgers gebracht werden.

Gemäß einer bevorzugten Ausführungsform der Erfindung weisen die Halteeinrichtungen jeweils drei Rollen auf, von denen zwei gegenüberliegend an den Stirnflächen und eine an der Umfangsfläche der Scheibe angreifen. Auf diese Weise kann die Verbindung zwischen der Vorrichtung und dem Werkstückträger, insbesondere in Verbindung mit kreisförmigen Randbereichen an der Scheibe des Werkstückträgers, besonders exakt hergestellt werden.

Um Positionierungsfehler des Werkstückträgers vor der Vorrichtung während des Eingreifens der Halteeinrichtungen an der Scheibe auszugleichen, kann vorgesehen sein, daß an der Anlaufseite der kreisbogenförmigen Randbereiche Anlaufschrägen vorgesehen sind.

Vorzugsweise sind die kreisbogenförmigen Randbereiche an der Scheibe befestigte Segmente. Dadurch können bei der Montage Fertigungsungenauigkeiten ausgeglichen werden.

Um ein Verdrehen des Werkstückträgers in der Vorrichtung sicher zu unterbinden, ist gemäß einer bevorzugten Weiterbildung der Erfindung an der Vorrichtung ein Absteckdorn beweglich angeordnet, der in eine an der Scheibe angeordnete Öffnung einschiebbar ist.

Um Fertigungstoleranzen ausgleichen zu können, können der Absteckdorn und die Öffnung konisch ausgeführt sein und/oder die Öffnung als sich in radialer Richtung erstreckendes Langloch ausgeführt sein.

Gemäß einer bevorzugten Ausführungsform der Erfindung kann vorgesehen sein, daß die Achse, um welche die Halteeinrichtungen verschwenkbar sind und die gemeinsame Achse der kreisbogenförmigen Randbereiche vor dem Eingriff der Halteeinrichtungen mit der Scheibe koaxial liegen. Dadurch ist ein klemmfreies Ein- und Ausschwenken der Halteeinrichtungen auf und von der Scheibe gewährleistet.

Wenn jedoch gemäß einer weiteren vorteilhaften Ausführungsform der Erfindung die Achse, um welche die Halteeinrichtungen verschwenkbar sind, vor dem Eingriff der Halteeienrichtungen mit der Scheibe höher liegt, als die gemeinsame Achse der kreisbogenförmigen Randbereiche, dann wird der Werkstückträger beim Ankoppeln an die Vorrichtung automatisch um die Höhendifferenz zwischen den beiden Achsen an- und von der Fördereinrichtung abgehoben. Ein klemmfreier Eingriff der Halteeinrichtung an die kreisbogenförmigen Randbereiche der Scheibe kann z.B. durch die Anlaufschrägen an den kreisbogenförmigen Randbereichen gewährleistet sein.

Weitere Einzelheiten und Vorteile der Erfindung ergeben sich aus den Unteransprüchen und der folgenden Beschreibung unter Bezugnahme auf die Zeichnungen. Es zeigt:

Fig. 1 schematisch die Stellung des Werkstückträgers vor der Vorrichtung und vor dem Befestigen des Werkstückträgers an der Vorrichtung,

Fig. 2 einen Schnitt durch die Vorrichtung von Fig. 1 entlang der Linie II-II,

Fig. 3 eine Seitenansicht des Werkstückträgers von Fig. 1,

Fig. 4 schematisch die Vorrichtung mit daran befestigtem Werkstückträger,

Fig. 5 eine Seitenansicht der Vorrichtung von Fig. 4 teilweise im Schnitt und

Fig. 6 in vergrößertem Maßstab eine Ausführungsform einer Halteeinrichtung im Schnitt entlang der Linie VI-VI in Fig. 4.

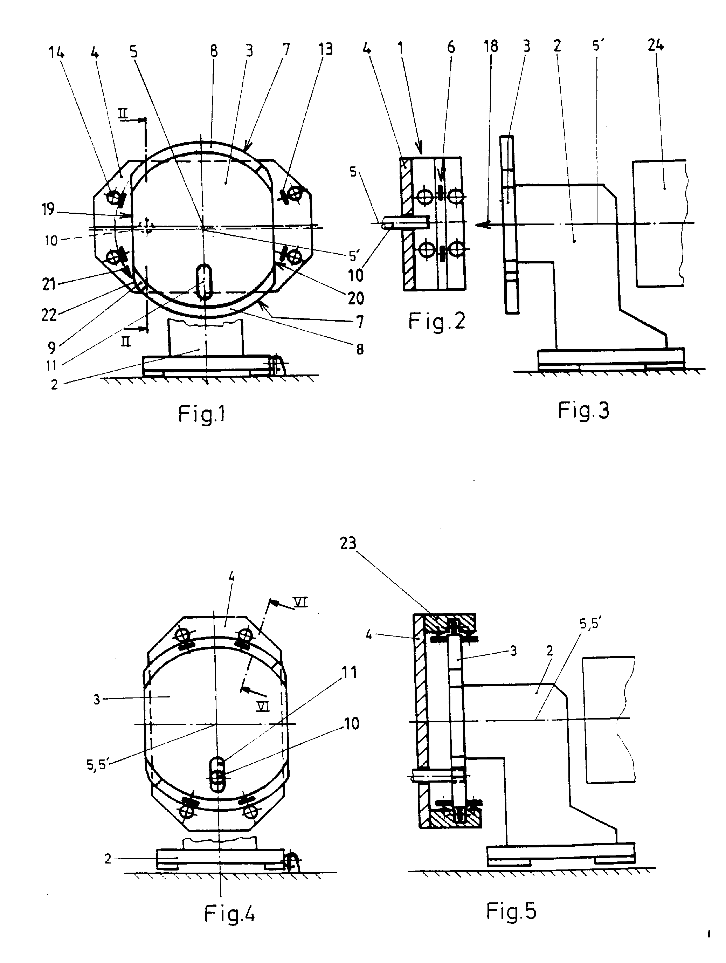

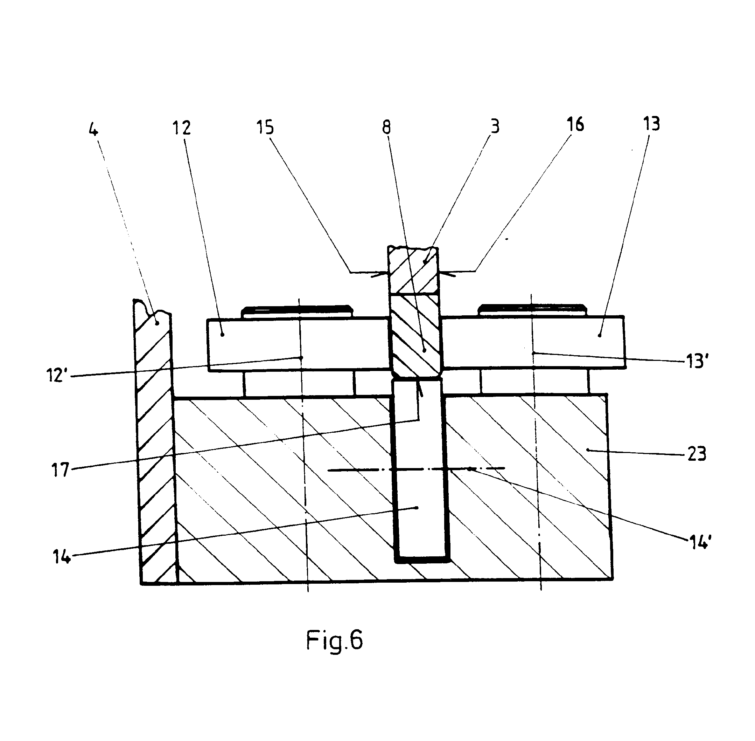

In Fig. 1 ist eine Vorrichtung 1 zum Halten eines Werkstückträgers 2 in Form einer Palette schematisch dargestellt. Die Vorrichtung 1 weist eine Platte 4 auf, die um eine etwa horizontal liegende Achse 5 verdrehbar ist. An der Platte 4 sind vier Halteeinrichtungen 6 einander paarweise gegenüberliegend befestigt. Die Halteeinrichtungen 6, von denen eine in Fig. 6 detaillierter dargestellt ist, sind in den Fig. 1 und 4 nur symbolisch dargestellt.

An der Palette 2 ist eine Scheibe 3 befestigt, die zwei kreisbogenförmige Randbereiche 7 aufweist. Diese beiden einander gegenüberliegenden, kreisbogenförmigen Randbereiche 7 sind durch mit der Scheibe 3 verschraubte Segmente 8 gebildet. Die Mittelachse 5' der kreisbogenförmigen Randbereiche 7 liegt etwas unter der Drehachse 5 der Vorrichtung 1.

In der Scheibe 3 der Palette 2 ist weiters eine Öffnung 11 vorgesehen, die als Langloch ausgebildet und radial zur Drehachse 5 ausgerichtet ist. Dieser Öffnung 11 ist ein an der Platte 4 der Vorrichtung 1 angeordneter Absteckdorn 10 zugeordnet, der in der in Fig. 1 gezeigten Stellung zurückgezogen und in der in Fig. 4 gezeigten Stellung in die Öffnung 11 vorgeschoben ist. Dieser Absteckdorn 10 kann mit einem Fangkonus ausgestattet sein, der in einen selbsthemmenden Konus übergeht.

In Fig. 6 ist eine Halteeinrichtung 6 detaillierter dargestellt. Die Halteeinrichtung 6 besteht aus drei Rollen 12, 13 und 14, die um Achsen 12', 13' bzw. 14' in einem mit der Platte 4 verbundenen Lagerkörper 23 drehbar gelagert sind. Die beiden einander gegenüberliegenden Rollen 12 und 13 greifen an den Stirnflächen 15 und 16 der Segmente 8 der Scheibe 3 an. Die Rolle 14 liegt an der Umfangsfläche 17 des Segmentes 8 an.

Der Andockvorgang des Werkstückträgers 2 an der Vorrichtung 1 erfolgt wie nachfolgend beschrieben:

Der Werkstückträger 2 wird durch eine nicht dargestellte Fördereinrichtung in Richtung des Pfeiles 18 zur Vorrichtung 1 hingeführt. Da sich die Platte 4 der Vorrichtung 1 in ihrer horizontalen Stellung befindet und die Platte 3 des Werkstückträgers 2 an ihrer linken und rechten Seite 19 und 20 abgeflacht ist, kann die Scheibe 3 ungehindert zwischen die Halteeinrichtungen 6 positioniert werden (sh. Fig. 1). Anschließend wird die Platte 4 mit den Halteeinrichtungen 6 in Richtung des Pfeiles 21 gedreht, bis die Rollen 12 und 13 über Anlaufschrägen 9 an der Vorderseite 16 bzw. Rückseite 15 der Segmente 8 und Anlaufschrägen 22 an den Umfangsflächen der kreisbogenförmigen Randbereiche 7 auf die Segmente 8 laufen. Die Platte 4 wird solange gedreht bis die in den Fig. 4 und 5 dargestellte Stellung erreicht ist. Durch den beschriebenen Andockvorgang wurde der Werkstückträger, dessen Mittelachse 5' vor dem Andockvorgang unter der Drehachse 5 der Vorrichtung 1 gelegen war, angehoben, so daß die Achsen 5 und 5' nun koaxial liegen.

Die Scheibe 3 und somit der Werkstückträger 2 sind jetzt sowohl in X-, Y- als auch in Z-Richtung fest mit der Platte 4 der Vorrichtung 1 verbunden. Um auch ein Verdrehen der Scheibe 3 gegenüber der Platte 4 zu unterbinden, wird der bisher in seiner zurückgezogenen Stellung gehaltene Absteckdorn 10 vorgeschoben, so daß er in die Öffnung 11 in der Scheibe 3 eingreift.

Das Werkstück 24 kann nun bearbeitet, d.h. im Fall einer Roboterschweißanlage, abgeschweißt werden. Nach Beendigung der Bearbeitung des Werkstückes wird der Absteckdorn 10 durch eine Einrichtung wieder zurückgezogen, die Platte 4 der Vorrichtung 1 abermals verdreht, bis sie wieder die in Fig. 1 dargestellte Lage einnimmt und der Werkstückträger 2 durch die Fördereineinrichtung abtransportiert.

Es ist ersichtlich, daß durch die erfindungsgemäße Werkstückhalterung keine Hebeeinrichtung mehr erforderlich ist, die ein Ankoppeln des Werkzeugträgers 2 an die Vorrichtung ermöglicht, wodurch einerseits die Vorrichtung technisch einfacher wird und anderseits der Andockvorgang durch Entfall einer Hubbewegung zeitlich verkürzt und vereinfacht wird.

Durch die erfindungsgemäße Ausführung der Werkstückhalterung ist es auch möglich, exakte Bezugsflächen für eine exakte Positionierung des Werkstückes 24 anzugeben. Die eine Bezugsseite ist der Fördereinrichtung zugeordnet und den entsprechenden Gegebenheiten angepaßt. Die zweite Bezugsseite ist der Vorrichtung zugeordnet und gemäß der beschriebenen, bevorzugten Ausführungsform durch die kreisbogenförmige Gestaltung der Scheibe und die Öffnung, die mit dem Absteckbolzen zusammenwirkt, ebenfalls exakt definiert.


**Patentansprüche**

1. Werkstückhalterung zur Befestigung eines Werkstückträgers an einer Vorrichtung, vorzugsweise an einem Werkstückmanipulator einer Roboterschweiffanlage, gekennzeichnet durch eine Scheibe (3), die am Werkstückträger (2) angeordnet ist und durch wenigstens drei an der Vorrichtung (1) angeordnete Halteeinrichtungen (6), die zum Eingriff mit der Scheibe (3) um eine gemeinsame Achse (5) verschwenkbar sind.

2. Werkstückhalterung nach Anspruch 1, dadurch gekennzeichnet, daß die Scheibe (3) wenigstens zwei kreisbogenförmige Randbereiche (7) aufweist.

3. Werkstückhalterung nach Anspruch 2, dadurch gekennzeichnet, daß die Halteeinrichtungen (6) jeweils drei Rollen (12, 13, 14) aufweisen, von denen zwei (12, 13) gegenüberliegend an den Stirnflächen (15, 16) und eine an der Umfangsfläche (17) der Scheibe (3) angreifen.

4. Werkstückhalterung nach Anspruch 2 oder 3, dadurch gekennzeichnet, daß die Scheibe (3) zwei kreisbogenförmige Randbereiche (7) aufweist, an denen jeweils zwei Halteeinrichtungen (6) angreifen.

5. Werkstückhalterung nach einem der Ansprüche 2 bis 4, dadurch gekennzeichnet, daß an der Anlaufseite der kreisbogenförmigen Randbereiche (7) Anlaufschrägen (9, 22) vorgesehen sind.

6. Werkstückhalterung nach einem der Ansprüche 2 bis 5, dadurch gekennzeichnet, daß die kreisbogenförmigen Randbereiche (7) an der Scheibe (3) befestigte Segmente (8) sind.

7. Werkstückhalterung nach einem der Ansprüche 1 bis 6, dadurch gekennzeichnet, daß an der Vorrichtung (1) ein Absteckdorn (10) beweglich angeordnet ist, der in eine an der Scheibe (3) vorgesehene Öffnung (11) einschiebbar ist.

8. Werkstückhalterung nach Anspruch 7, dadurch gekennzeichnet, daß der Absteckdorn (10) und die Öffnung (11) konisch ausgeführt sind.

9. Werkstückhalterung nach Anspruch 7 oder 8, dadurch gekennzeichnet, daß die Öffnung (11) als sich in radialer Richtung erstreckendes Langloch ausgeführt ist.

10. Werkstückhalterung nach einem der Ansprüche 2 bis 9, dadurch gekennzeichnet, daß die Achse (5), um welche die Halteeinrichtungen (6) verschwenkbar sind und die gemeinsame Achse (5') der kreisbogenförmigen Randbereiche (7) vor dem Eingriff der Halteeinrichtungen (6) mit der Scheibe (3) koaxial liegen.

11. Werkstückträger nach einem der Ansprüche 2 bis 9, dadurch gekennzeichnet, daß die Achse (5), um welche die Haltereinrichtungen (6) verschwenkbar sind, vor dem Eingriff der Halteeinrichtungen (6) mit der Scheibe (3) höher liegt, als die gemeinsame Achse (5') der kreisbogenförmigen Randbereiche (7).

12. Werkstückträger, insbesondere Palette, zur Verwendung in einer Werkstückhalterung nach einem der Ansprüche 1 bis 11, dadurch gekennzeichnet, daß er eine Bezugsseite für ein Fördersystem, durch das er zur Vorrichtung (1) transportiert wird, und eine Bezugsseite für die Vorrichtung (1), bestehend aus der Scheibe (3) und der Öffnung (11), aufweist.

13. Werkstückträger nach Anspruch 12, gekennzeichnet durch eine Einrichtung zur Befestigung eines Werkstückes.

Fig.1

Fig.2

Fig.3

Fig.4

Fig.5

Fig.6

Europäisches
Patentamt

# EUROPÄISCHER RECHERCHENBERICHT

Nummer der Anmeldung

## EINSCHLÄGIGE DOKUMENTE

EP 91890242.0

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | DD - B - 229 635 (REICHSBAHN) * Fig. 1,2; Seite 2, Ausführungsbeispiel * -- | 1,2,7, 10 | B 23 Q 3/02 B 23 K 37/04 |
| A | DD - A - 114 920 (NITSCHKE) * Fig. 1,2; Seite 2, Zeilen 107-134 * -- | 1,2,7, 10 | |
| A | DD - A - 122 212 (BIEBER) * Fig. 2 * -- | 1,2,7, 10 | |
| A | DE - A - 2 056 866 (CATERPILLAR) * Fig. 1 * -- | 1,2 | |
| A | DE - A - 3 109 974 (SMW) * Fig. 1 * ---- | 1 | |

RECHERCHIERTE SACHGEBIETE (Int Cl⁵)

B 23 Q 1/00
B 23 Q 3/00
B 23 Q 7/00
B 25 J 11/00
B 25 J 15/00
B 23 K 37/00

Der vorliegende Recherchenbericht wurde für alle Patentansprüche erstellt.

| Recherchenort WIEN | Abschlußdatum der Recherche 23-12-1991 | Prüfer BLASL |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82